Europäisches Patentamt

European Patent Office

Office européen des brevets

(19)

(11) **EP 1 012 828 B1**

(12) **EUROPÄISCHE PATENTSCHRIFT**

(45) Veröffentlichungstag und Bekanntmachung des Hinweises auf die Patenterteilung:
**16.08.2001 Patentblatt 2001/33**

(21) Anmeldenummer: **98954132.1**

(22) Anmeldetag: **07.09.1998**

(51) Int Cl.$^7$: **G10L 15/02**, G10L 15/28

(86) Internationale Anmeldenummer:
**PCT/DE98/02633**

(87) Internationale Veröffentlichungsnummer:
**WO 99/14741 (25.03.1999 Gazette 1999/12)**

(54) **VERFAHREN ZUR ERKENNUNG EINES SCHLÜSSELWORTS IN GESPROCHENER SPRACHE**

METHOD FOR RECOGNISING A KEYWORD IN SPEECH

PROCEDE POUR LA RECONNAISSANCE D'UN MOT DE PASSE DANS UN MESSAGE ORAL

(84) Benannte Vertragsstaaten:
**DE ES FR GB IT**

(30) Priorität: **18.09.1997 DE 19741211**

(43) Veröffentlichungstag der Anmeldung:
**28.06.2000 Patentblatt 2000/26**

(73) Patentinhaber: **SIEMENS AKTIENGESELLSCHAFT
80333 München (DE)**

(72) Erfinder:
- **JUNKAWITSCH, Jochen
  D-80809 München (DE)**
- **HÖGE, Harald
  D-82131 Gauting (DE)**

(56) Entgegenhaltungen:
- **RIVLIN Z ET AL: "A phone-dependent confidence measure for utterance rejection" 1996 IEEE INTERNATIONAL CONFERENCE ON ACOUSTICS, SPEECH, AND SIGNAL PROCESSING CONFERENCE PROCEEDINGS (CAT. NO.96CH35903), 1996 IEEE INTERNATIONAL CONFERENCE ON ACOUSTICS, SPEECH, AND SIGNAL PROCESSING CONFERENCE PROCEEDINGS, ATLANTA, GA, USA, 7-10 M, Seiten 515-517 vol. 1, XP002092085 ISBN 0-7803-3192-3, 1996, New York, NY, USA, IEEE, USA**
- **COX S ET AL: "Confidence measures for the SWITCHBOARD database" 1996 IEEE INTERNATIONAL CONFERENCE ON ACOUSTICS, SPEECH, AND SIGNAL PROCESSING CONFERENCE PROCEEDINGS (CAT. NO.96CH35903), 1996 IEEE INTERNATIONAL CONFERENCE ON ACOUSTICS, SPEECH, AND SIGNAL PROCESSING CONFERENCE PROCEEDINGS, ATLANTA, GA, USA, 7-10 M, Seiten 511-514 vol. 1, XP002092086 ISBN 0-7803-3192-3, 1996, New York, NY, USA, IEEE, USA**
- **LLEIDA E ET AL: "Likelihood ratio decoding and confidence measures for continuous speech recognition" PROCEEDINGS ICSLP 96. FOURTH INTERNATIONAL CONFERENCE ON SPOKEN LANGUAGE PROCESSING (CAT. NO.96TH8206), PROCEEDING OF FOURTH INTERNATIONAL CONFERENCE ON SPOKEN LANGUAGE PROCESSING. ICSLP '96, PHILADELPHIA, PA, USA, 3-6 OCT. 1996, Seiten 478-481 vol.1, XP002092087 ISBN 0-7803-3555-4, 1996, New York, NY, USA, IEEE, USA**

**Beschreibung**

Die Erfindung betrifft ein Verfahren zur Erkennung eines Schlüsselworts in gesprochener Sprache.

Bei der Erkennung eines Schlüsselworts in gesprochener Sprache ist bisher stets eine Modellierung der kompletten gesprochenen Äußerung erforderlich. Dem Fachmann sind im wesentlichen zwei Verfahren bekannt:

Aus [1] ist ein Verfahren zur Erkennung eines Schlüsselworts bekannt, das einen Spracherkenner mit großem Wortschatz verwendet. Dabei wird versucht, die gesprochene Sprache vollständig zu erkennen. Anschließend werden die erkannten Wörter auf eventuell vorhandene Schlüsselwörter hin untersucht. Dieses Verfahren ist wegen des großen Wortschatzes und wegen der Probleme bei einer Modellierung von spontansprachlichen Äußerungen und Geräuschen, also nicht eindeutig einem Wort zuordenbaren Teil des Sprachsignals, aufwendig und fehlerbehaftet.

Ein anderes Verfahren verwendet spezielle Füll-Modelle (auch: Filler-, Garbage-Modelle), um Äußerungsteile zu modellieren, die nicht zum Wortschatz der Schlüsselwörter gehören (sog. OOV-Anteile, OOV=Out of Vocabulary). Ein derartiger Spracherkenner ist in [2] beschrieben und umfaßt die Schlüsselwörter sowie ein Füll-Modell oder mehrere Füll-Modelle. Dieses Verfahren liefert eine Folge von Füll- und Schlüsselwortsymbolen. Dabei ist es eine Schwierigkeit, ein geeignetes Füll-Modell zu entwerfen bzw. zu trainieren, die sich gut von den modellierten Schlüsselwörtern abheben, also eine hohe Diskriminanz bezüglich der Schlüsselwortmodelle aufweisen.

Weiterhin sind aus [3] oder [4] Hidden-Markov-Modelle (HMMs) bekannt. Auch ist aus [3] oder [4] bekannt, einen besten Pfad mittels des Viterbi-Algorithmus zu bestimmen.

Hidden-Markov-Modelle (HMMs) dienen der Beschreibung diskreter stochastischer Prozesse (auch Markov-Prozesse genannt). Im Bereich der Spracherkennung dienen Hidden-Markov-Modelle u.a. zum Aufbau eines Wortlexikons, in dem die aus Untereinheiten aufgebauten Wortmodelle verzeichnet sind.

Formal wird ein Hidden-Markov-Modell beschrieben durch:

$$\lambda = (A, B, \underline{\pi}) \tag{0-1}$$

mit einer quadratischen Zustandsübergangsmatrix **A**, die Zustandsübergangswahrscheinlichkeiten $A_{ij}$ enthält:

$$A = \{A_{ij}\} \text{ mit } i,j = 1, ..., N \tag{0-2}$$

und einer Emissionsmatrix **B**, die Emissionswahrscheinlichkeiten $B_{ik}$ umfaßt:

$$B = \{B_{ik}\} \text{ mit } i = 1,...,N; k = 1,..,M \tag{0-3}$$

Zur Initialisierung dient ein N-dimensionaler Vektor $\underline{\pi}$, eine Auftrittswahrscheinlichkeit der N Zustände für den Zeitpunkt t = 1 festlegt:

$$\underline{\pi} = \{\pi_i\} = P\big(s(1) = s_i\big) \tag{0-4}$$

Dabei wird allgemein mit

$$P\big(s(t) = q_t\big) \tag{0-5}$$

die Wahrscheinlichkeit dafür bezeichnet, daß sich die Markovkette

$$\underline{s} = \{s(1), s(2), s(3), ..., s(t), ...\} \tag{0-6}$$

zum Zeitpunkt t im Zustand $q_t$ befindet. Dabei weist die Markovkette $\underline{s}$ einen Wertebereich

$$s(t) \in \{s_1, s_2, ..., s_N\} \qquad (0\text{-}7)$$

auf, wobei dieser Wertebereich eine endliche Menge von N Zuständen enthält. Der Zustand, in dem sich der Markov-Prozeß zum Zeitpunkt t befindet, heißt $q_t$.

Die Emissionswahrscheinlichkeit $B_{ik}$ ergibt sich aus dem Auftreten eines bestimmten Symbols $\sigma_k$ im Zustand $s_i$ zu

$$B_{ik} = P(\sigma_k | q_t \, s_i) \qquad (0\text{-}9)$$

wobei ein Zeichenvorrat $\Sigma$ der Größe M gemäß

$$\Sigma = \{\sigma_1, \sigma_2, ..., \sigma_M\} \qquad (0\text{-}9)$$

bestimmte Symbole $\sigma_k$ umfaßt (k=1..M).

Ein Zustandsraum aus Hidden-Markov-Modellen ergibt sich, indem jeder Zustand des Hidden-Markov-Modells eine vorgegebene Menge Nachfolgezustände haben kann: sich selbst, den nächsten Zustand, den übernächsten Zustand, usf. Der Zustandsraum mit allen möglichen Übergängen wird als Trellis bezeichnet. Bei Hidden-Markov-Modellen der Ordnung 1 ist eine mehr als ein Zeitschritt zurückliegende Vergangenheit irrelevant.

Dem Viterbi-Algorithmus liegt die Idee zugrunde, daß, wenn man sich lokal auf einem optimalen Pfad im Zustandsraum (Trellis) befindet, dieser immer Bestandteil eines globalen optimalen Pfades ist. Wegen der Ordnung 1 der Hidden-Markov-Modelle ist nur der beste Vorgänger eines Zustandes zu betrachten, da die schlechteren Vorgänger vorab eine schlechtere Bewertung erhalten haben. Das bedeutet also, daß man rekursiv, beginnend vom ersten Zeitpunkt an, Zeitschritt für Zeitschritt, den optimalen Pfad suchen kann, indem für jeden Zeitschritt alle möglichen Fortsetzungen des Pfades bestimmt werden und nur die beste Fortsetzung ausgewählt wird.

Bei den beiden in [1] und [2] beschriebenen Verfahren ist jeweils eine Modellierung der OOV-Anteile notwendig. Im ersten Fall [1] müssen die Wörter der Äußerung explizit im Wortschatz des Erkenners vorhanden sein, im zweiten Fall [2] werden alle OOV-Wörter und OOV-Geräusche durch spezielle Füll-Modelle dargestellt.

Aus dem Dokument "A Phone-Dependent Confidence Measure for litterance Rejection", Rivlin et.al., ICASSP '96, pp. 516-517" ist es bekannt, für die Rückweisung in der Spracherkennung ein phonembasiertes, globales Konfidenzmaß zu verwenden. Dieses Dokument weist auch auf die Verwendbarkeit für die Erkennung von Schlüsselwörtern hin. Das genannte Konfidenzmaß wird in diesem Dokument für die gesamte Äußerung berechnet.

Die Aufgabe der Erfindung besteht darin, ein Verfahren anzugeben, das die Erkennung eines Schlüsselworts in gesprochener Sprache ermöglicht, wobei die oben beschriebenen Nachteile vermieden werden.

Diese Aufgabe wird gemäß den Merkmalen des Patentanspruchs 1 gelöst.

Erfindungsgemäß angegeben wird ein Verfahren zur Erkennung eines Schlüsselworts in gesprochener Sprache, wobei das Schlüsselwort dargestellt wird durch eine Folge von Zuständen W. Die gesprochene Sprache wird mit einer vorgegebenen Rate abgetastet und zu jedem Abtastzeitpunkt t ein Merkmalsvektor $O_t$ für ein zu dem Abtastzeitpunkt t gehörendes Sprachsignal aus der gesprochenen Sprache erstellt. Eine Folge O von Merkmalsvektoren $O_t$ wird mittels eines Viterbi-Algorithmus auf die Folge von Zuständen W abgebildet, wobei in einem Zustand ein lokales Konfidenzmaß ein Emissionsmaß, vorzugsweise den negativen Logarithmus einer Emissionswahrscheinlichkeit, ersetzt. Der Viterbi-Algorithmus liefert ein globales Konfidenzmaß C (auch: Konfidenzmaß C). Das Schlüsselwort wird in der gesprochenen Sprache erkannt, wenn gilt:

$$C(W,O) < T \qquad (1),$$

wobei

C()  das Konfidenzmaß,
W    das Schlüsselwort, dargestellt als eine Folge von Zuständen,
O    die Folge von Merkmalsvektoren $O_t$,
T    einen vorgegebenen Schwellwert

bezeichnen.

Ansonsten wird das Schlüsselwort in der gesprochenen Sprache nicht erkannt.

Ein Vorteil der Erfindung besteht darin, daß innerhalb der gesprochenen Sprache ein Schlüsselwort erkannt wird, ohne daß die Äußerung insgesamt modelliert werden muß. Dadurch ergibt sich ein deutlich reduzierter Aufwand bei der Implementierung und demzufolge auch ein leistungsfähigeres (schnelleres) Verfahren. Durch die Verwendung des (globalen) Konfidenzmaßes C als ein grundlegendes Dekodierprinzip beschränkt sich die akustische Modellierung innerhalb des Dekodiervorgangs auf die Schlüsselwörter.

Eine Weiterbildung besteht darin, daß zu jedem Abtastzeitpunkt t ein neuer Pfad durch den Zustandsraum der Hidden-Markov-Modelle in einem ersten Zustand der Folge von Zuständen W beginnt. Dadurch wird zu jedem Abtastzeitpunkt angenommen, daß ein Beginn eines Schlüsselwortes in der gesprochenen Sprache enthalten ist. Anhand des Konfidenzmaßes werden aus nachfolgenden Abtastzeitpunkten resultierenden Merkmalsvektoren auf die durch Hidden-Markov-Modelle repräsentierte Zustände des Schlüsselwortes abgebildet. Es ergibt sich am Ende der Abbildung, also am Pfad-Ende, ein globales Konfidenzmaß, anhand dessen eine Entscheidung getroffen wird, ob das der vermeintliche Beginn des Schlüsselwortes wirklich ein solcher war. Wenn ja, wird das Schlüsselwort erkannt, ansonsten wird es nicht erkannt.

Im Rahmen einer Weiterbildung der Erfindung ist das globale Konfidenzmaß C bestimmt durch

$$C = - \log P(W|O) \qquad\qquad (2)$$

und das zugehörige lokale Konfidenzmaß c bestimmt ist durch

$$c = - \log \frac{P(O_t|s_j) \cdot P(s_j)}{P(O_t)} \qquad\qquad (3),$$

wobei

$s_j$      einen Zustand der Folge von Zuständen,
$P(W|O)$      eine Wahrscheinlichkeit für das Schlüsselwort unter der Bedingung einer Folge von Merkmalsvektoren $O_t$
$P(O_t|s_j)$      die Emissionswahrscheinlichkeit,
$P(s_j)$      die Wahrscheinlichkeit für den Zustand $s_j$,
$P(O_t)$      die Wahrscheinlichkeit für den Merkmalsvektor $O_t$

bezeichnen.

Ein geeignetes globales Konfidenzmaß ist charakterisiert durch die Eigenschaft, daß es Aufschluß über den Grad einer Zuverlässigkeit angibt, mit der ein Schlüsselwort detektiert wird. Im negativen logarithmischen Bereich drückt ein kleiner Wert des globalen Konfidenzmaßes C eine hohe Zuverlässigkeit aus.

Im Rahmen einer zusätzlichen Weiterbildung ist das Konfidenzmaß C bestimmt durch

$$C = - \log \frac{P(O|W)}{P(O|\overline{W})} \qquad\qquad (4)$$

und das zugehörige lokale Konfidenzmaß ist bestimmt durch

$$c = - \log \frac{P(O_t|s_j)}{P(O_t|\overline{s_j})} \qquad\qquad (5)$$

wobei

$P(O|\overline{W})$      die Wahrscheinlichkeit für die Folge von Merkmalsvektoren $O_t$ unter der Bedingung, daß nicht das Schlüsselwort W eintritt,
$\overline{s_j}$      das Gegenereignis zum Zustand $s_j$ (also: nicht der Zustand $s_j$)

bezeichnen.

Der Vorteil der dargestellten Konfidenzmaße besteht u.a. darin, daß sie berechenbar sind, also kein vorhergehendes Training und/oder kein Schätzen erforderlich ist/sind.

Aus den Definitionen der globalen Konfidenzmaße lassen sich jeweils die Definitionen der lokalen Konfidenzmaße herleiten. In die Berechnung des Konfidenzmaßes für ein Schlüsselwort gehen lokale Konfidenzmaße zu denjenigen Zeitpunkten ein, die zeitlich mit der Äußerung dieses Schlüsselworts zusammenfallen.

Mit den Beziehungen

$$P(O_t) = \sum_k P(O_t | s_k) \cdot P(s_k) \qquad (6)$$

und

$$P(O_t | \overline{s_j}) = \sum_{k \neq j} P(O_t | s_k) \cdot P(s_k) \qquad (7)$$

lassen sich die lokalen Konfidenzmaße berechnen.

Ferner ist es möglich, $P(O_t)$ bzw.

$$P(O_t | \overline{s_j})$$

durch geeignete Näherungsverfahren zu bestimmen. Ein Beispiel für ein solches Näherungsverfahren ist die Mittelung der n-besten Emissionen

$$-\log P(O_t | s_j)$$

zu jedem Zeitpunkt t.

Der Dekodiervorgang wird üblicherweise mit Hilfe des Viterbi-Algorithmus durchgeführt:

$$C_{t,s_j} = \min_k \left( C_{t-1,s_k} + c_{t,s_j} + a_{kj} \right),$$

wobei

$C_{t,s_j}$      das globale akkumulierte Konfidenzmaß zum Zeitpunkt t im Zustand $s_j$,

$C_{t-1,s_k}$      das globale akkumulierte Konfidenzmaß zum Zeitpunkt t-1 im Zustand $s_k$,

$c_{t,s_j}$      das lokale Konfidenzmaß zum Zeitpunkt t im Zustand $s_j$,

$a_{kj}$      eine Übergangsstrafe vom Zustand $s_k$ in den Zustand $S_j$

bezeichnen.

Da für eine Darstellung des globalen Konfidenzmaßes für ein Schlüsselwort keine lokalen Konfidenzmaße außerhalb der zeitlichen Grenzen des Schlüsselwortes benötigt werden, kann bei der Suche nach dem Schlüsselwort auf eine akustische Modellierung der OOV-Anteile verzichtet werden.

Durch Anwendung des Viterbi-Algorithmus mit der Möglichkeit, zu jedem Zeitpunkt t einen neuen Pfad im ersten Zustand eines Schlüsselworts, wobei vorzugsweise das Schlüsselwort in einzelne Zustände eines Hidden-Markov-Modells (HMMs) unterteilt ist, zu starten, wird das globale Konfidenzmaß für dieses Schlüsselwort optimiert und gleichzeitig der optimale Startzeitpunkt ermittelt (Back Tracking des Viterbi-Algorithmus).

Es ist weiterhin zweckmäßig, für einen vorgegebenen Zeitraum, auch unterhalb des Schwellwertes T nach einem Minimum zu suchen. Dadurch wird vermieden, daß innerhalb dieses vorgegebenen Zeitraums ein Schlüsselwort mehrfach erkannt wird.

Gibt es Schlüsselwörter, die einander im Hinblick auf ihre durch die jeweilige Folge von Zuständen repräsentierten Beschreibungsform, ähnlich sind, so ist es nützlich, einen Mechanismus einzusetzen, der bei Erkennung eines Schlüsselwortes ausschließt, daß ein anderes Schlüsselwort teilweise in dem Zeitraum des erkannten Schlüsselworts in dem gesprochenen Sprachsignal enthalten war.

Weiterbildungen der Erfindung ergeben sich auch aus den abhängigen Ansprüchen.

Anhand der folgenden Figuren werden Ausführungsbeispiele der Erfindung näher dargestellt.

Es zeigen

Fig.1    ein Blockdiagramm eines Verfahrens zur Erkennung eines Schlüsselworts in gesprochener Sprache,

Fig.2    eine Skizze, die die Bestimmung eines Konfidenzmaßes veranschaulicht,

Fig.3    eine Skizze wie Fig.3, die den Verlauf eines angenommenen Konfidenzmaßes über eine vorgegebene Zeitdauer darstellt.

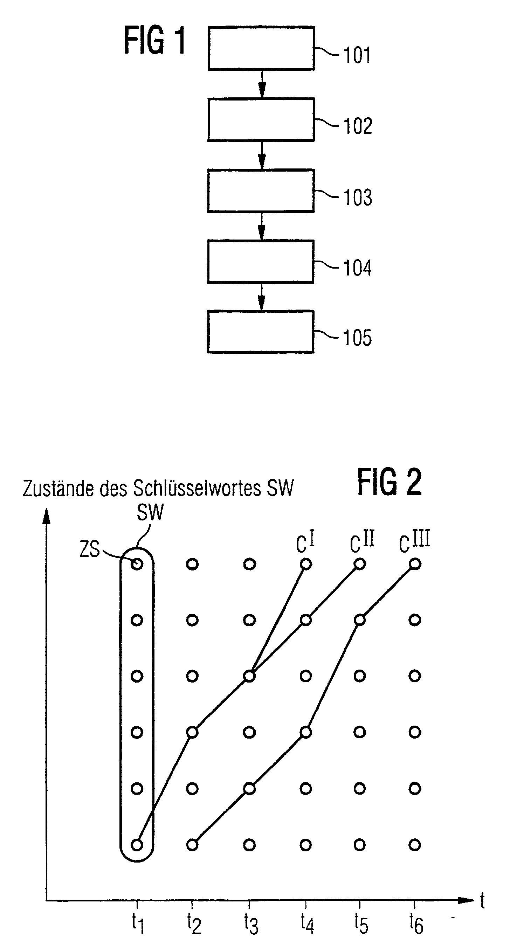

In **Fig.1** ist ein Blockdiagramm eines Verfahrens zur Erkennung eines Schlüsselworts in kontinuierlicher Sprache dargestellt.

In einem Schritt 101 wird das Schlüsselwort dargestellt durch eine Folge von Zuständen W. Vorzugsweise werden dazu Phonem-HMMs mit je drei Zuständen eingesetzt (siehe [3]). In einem nächsten Schritt 102 wird die kontinuierliche Sprache abgetastet und zu jedem Abtastzeitpunkt t ein Merkmalsvektor $O_t$ für ein zu dem Abtastzeitpunkt t gehörendes Sprachsignal aus der kontinuierlichen Sprache erstellt. Dabei umfaßt der Merkmalsvektor $O_t$ eine vorgegebene Menge Merkmale, die für das Sprachsignal zu dem Abtastzeitpunkt t kennzeichnend sind, als Komponenten.

In einem Schritt 103 werden eine Folge von Merkmalsvektoren, die für verschiedene Abtastzeitpunkte t aus dem Sprachsignal gewonnen worden sind, auf die Folge von Zuständen W abgebildet. Eine Abbildungsvorschrift stellt dabei der Viterbi-Algorithmus (siehe [3]) dar. Die beim Viterbi-Algorithmus eingesetzte Emissionswahrscheinlichkeit - log $P(O_t|s_j)$ wird durch ein lokales Konfidenzmaß ersetzt. In einem Schritt 104 liefert der Viterbi-Algorithmus zu jedem Zeitpunkt ein globales Konfidenzmaß C, das für die gefundenen Zustände der Folge von Zuständen W einzelne lokale Konfidenzmaße kumuliert umfaßt. Das Schlüsselwort wird in einem Schritt 105 in der kontinuierlichen Sprache erkannt, wenn gilt

$$C(W,O) < T \tag{1},$$

wobei

C()    das globale Konfidenzmaß,
W    das Schlüsselwort, dargestellt als eine Folge von Zuständen,
O    die Folge von Merkmalsvektoren $O_t$,
T    einen vorgegebenen Schwellwert

bezeichnen.

Ansonsten wird das Schlüsselwort in der kontinuierlichen Sprache nicht erkannt.

Nachfolgend werden zwei mögliche Realisierungen für ein globales Konfidenzmaß und jeweils ein zugehöriges lokales Konfidenzmaß beschrieben. Weitere Konfidenzmaße sind vorstellbar.

**Ein erstes Konfidenzmaß**

Das erste globale Konfidenzmaß wird definiert aus dem negativen Logarithmus einer a-posteriori-Wahrscheinlichkeit für das Schlüsselwort als ein Zuverlässigkeitsmaß:

$$C_1 = -\log P(W|O) \tag{2}$$

Nachfolgend wird die Bayes'sche-Regel in Verbindung mit folgenden Annahmen angewandt:

$$P(O) = \prod_t P(O_t) \tag{8},$$

$$P(W) = \prod_t P\left(s_{\psi(t)}\right) \tag{9},$$

$$P(O|W) = \prod_t \left[P\left(O_t|s_{\psi(t)}\right) \cdot a_{\psi(t-1),\psi(t)}\right] \tag{10}.$$

Die Wahrscheinlichkeit für eine Folge von Merkmalsvektoren P(O) wird dabei ausgedrückt als eine Multiplikation von Wahrscheinlichkeiten für einzelne Merkmalsvektoren $P(O_t)$. Auf die gleiche Art wird die Wahrscheinlichkeit für ein ganzes Wort P(W) berechnet, indem die einzelnen Wahrscheinlichkeiten

$$P\left(s_{\psi(t)}\right)$$

jedes einzelnen ausgewählten Zustands eines HMMs multipliziert werden, wobei die Funktion $\psi(t)$ eine Abbildung der Merkmalsvektoren (also der Zeit) auf die Zustände des Schlüsselwortes ist. Die bedingte Wahrscheinlichkeit P(O|W) entspricht der gewöhnlichen Wahrscheinlichkeit des HMMs, die mittels der Emissionswahrscheinlichkeiten

$$P\left(O_t|s_{\psi(t)}\right)$$

und der Transitionswahrscheinlichkeiten $a_{\psi(t-1),\psi(t)}$ berechnet werden kann. Somit ergibt sich das globale Konfidenzmaß $C_1$ zu:

$$C_1 = \sum_t -\log\left(\frac{P\left(O_t|s_{\psi(t)}\right) \cdot P\left(s_{\psi(t)}\right)}{P(O_t)} \cdot a_{\psi(t-1),\psi(t)}\right) \tag{11}.$$

Betrachtet man die Arbeitsweise des Viterbi-Algorithmus, so empfiehlt sich die Definition eines lokalen Konfidenzmaßes

$$c_1\left(O_t|s_j\right),$$

das innerhalb des Suchvorgangs des Viterbi-Algorithmus benutzt wird:

$$c_1\left(O_t\middle|s_j\right) = -\log \frac{P\left(O_t\middle|s_j\right) \cdot P\left(s_j\right)}{P\left(O_t\right)} \qquad (12).$$

Die Wahrscheinlichkeit des Merkmalsvektors, der im Nenner der Gleichung (12) erscheint, kann berechnet werden, indem alle Zustände des HMMs in Betracht gezogen werden:

$$P\left(O_t\right) = \sum_k P\left(O_t\middle|s_k\right) \cdot P\left(s_k\right) \qquad (13)$$

(siehe auch Gleichung (6)).

Die a-priori-Wahrscheinlichkeit $P(s_k)$ dieser Zustände ist in dem vorausgegangenen Training bestimmt worden. Somit ist das lokale Konfidenzmaß $c_1(O_t|s_j)$ vollständig berechenbar.

**Ein zweites Konfidenzmaß**

Die Definition eines zweiten globalen Konfidenzmaßes besteht aus dem Verhältnis der bedingten Wahrscheinlichkeiten einer Folge O von Merkmalsvektoren $O_t$ einmal unter der Bedingung einer das Schlüsselwort kennzeichnenden Folge von Zuständen W und ein anderes mal unter dem dazu inversen Modell $\overline{W}$. Es ergibt sich:

$$C_2 = -\log \frac{P(O|W)}{P(O|\overline{W})} \qquad (4).$$

Dabei stellt $\overline{W}$ lediglich ein Modell dar, das real nicht existiert, dessen Emissionswahrscheinlichkeit aber berechnet werden kann. Im Gegensatz zu der Definition des ersten globalen Konfidenzmaßes führt diese Definition zu einem symmetrischen globalen Konfidenzmaß, das bei 0 ein Symmetriezentrum aufweist, falls

$$P(O|W) = P(O|\overline{W}) \qquad (14)$$

erfüllt ist. Analog zu dem Fall für das erste globale Konfidenzmaß ergibt sich durch Einsetzen der Gleichungen (8), (9) und (10) unter Berücksichtigung des jeweils inversen Modells $\overline{a_{\psi(t-1),\psi(t)}}$ und $\overline{s_{\psi(t)}}$ die folgende Gleichung:

$$C_2 = \sum_t -\log \frac{P\left(O_t\middle|s_{\psi(t)}\right) \cdot a_{\psi(t-1),\psi(t)}}{P\left(O_t\middle|\overline{s_{\psi(t)}}\right) \cdot \overline{a_{\psi(t-1),\psi(t)}}} \qquad (15).$$

Ein passendes lokales Konfidenzmaß $c_2(O_t)$, das bei der von dem Viterbi-Algorithmus durchgeführten Suche verwendet werden kann, wird definiert zu:

$$c_2\left(O_t\middle|s_j\right) = -\log \frac{P\left(O_t\middle|s_j\right)}{P\left(O_t\middle|\overline{s_j}\right)} \qquad (16).$$

Auch in diesem Fall ist das lokale Konfidenzmaß

$$c_2\Big(O_t\big|s_j\Big)$$

berechenbar, da der Nenner berechnet werden kann, indem alle gewichteten Emissionswahrscheinlichkeiten außer für

$$P\Big(O_t\big|s_j\Big)$$

selbst berechnet werden können:

$$P\Big(O_t\big|\,\overline{s_j}\Big) \;=\; \sum_{k \neq j} P\Big(O_t\big|\,s_k\Big)\cdot P(s_k) \qquad\qquad (7)$$

siehe auch Gleichung (7)).

Somit führen beide Definitionen auf ein Konfidenzmaß, das im Fall eines niedrigen Wertes (im Fall des globalen Konfidenzmaßes $C_2$ einen negativen Wert) eine hohe Zuverlässigkeit dafür anzeigt, daß ein Schlüsselwort richtig erkannt worden ist.

Als ein Vorteil dieses berechenbaren Konfidenzmaßes wird angegeben, daß weder zusätzliche HMMs trainiert werden müssen, noch ein kunstvolles Manipulieren anderer betroffener Parameter notwendig ist. Die Konfidenzmaße können unter Verwendung allgemeiner Phonem-HMMs berechnet werden.

Die Definition von Konfidenzmaßen, wie oben gezeigt wurde, kann mit einer auf Hidden-Markov-Modellen basierten Viterbi-Suche verknüpft werden. Jeder einzelne Zustand $s_j$ der HMMs emittiert dann nicht den negativen Logarithmus einer Wahrscheinlichkeit

$$P\Big(O_t\big|s_j\Big),$$

sondern statt dessen ein lokales Konfidenzmaß $c_1$ oder $c_2$.

In **Fig.2** ist eine Skizze dargestellt, die die Bestimmung eines Konfidenzmaßes veranschaulicht.

Im oberen Diagramm von Fig.2 sind auf der Abszisse diskrete Zeitpunkte $t_1, t_2, \ldots$ und auf der Ordinate das durch eine Folge von Zuständen ZS gekennzeichnete Schlüsselwort SW dargestellt. In Fig.2 wird ein kontinuierliches Sprachsignal über einer Zeitachse t gezeigt.

Das kontinuierliche Sprachsignal kann mehrere, auch unterschiedliche, Schlüsselwörter enthalten, wobei zu einem Zeitpunkt vorzugsweise nur ein Schlüsselwort enthalten ist.

Das kontinuierliche Sprachsignal wird zu diskreten Zeitpunkten abgetastet und die zu dem jeweiligen Abtastzeitpunkt vorhandene Information in einem Merkmalsvektor $O_t$ abgespeichert. Erfindungsgemäß wird davon ausgegangen, daß ein Schlüsselwort zu jedem dieser Abtastzeitpunkte beginnen kann. Also beginnt zu jedem der Zeitpunkte t1, t2 oder t3 je ein potentielles Schlüsselwort, deren Pfade im Verlauf des Viterbi-Algorithmus rekombinieren können. Zur Vereinfachung wird hier von einem Schlüsselwort ausgegangen, wobei mehrere Schlüsselwörter je ein Verfahren für jedes zu erkennende Schlüsselwort benötigen.

Beginnt das Schlüsselwort also zu dem Zeitpunkt $t_1$, so wird anhand der aus der kontinuierlichen Sprache gewonnenen Merkmalsvektoren $O_t$ eine Abbildung der auf den Zeitpunkt $t_1$ folgenden Merkmalsvektoren vorgenommen. Es wird jeweils der bezüglich des akkumulierten Konfidenzmaßes beste Pfad PF bestimmt. Es ergibt sich für jeden Zeitpunkt t ein Konfidenzmaß C. Der Wert des Konfidenzmaßes gibt Aufschluß darüber, ob das Schlüsselwort in der kontinuierlichen Sprache enthalten war oder nicht und zum Zeitpunkt t geendet hat.

In Fig.2 sind beispielhaft Pfade eingezeichnet, die zu den Zeitpunkten $t_1$, $t_2$ und $t_3$ beginnen und zu den Zeitpunkten $t_4$, $t_5$ und $t_6$ zu den globalen Konfidenzmaßen $C^I$, $C^{II}$ und $C^{III}$ führen. Die zu $C^I$ und $C^{II}$ gehörenden globalen Konfidenzmaße korrespondieren zu dem möglichen Schlüsselwortbeginn in t1, während das globale Konfidenzmaß $C^{III}$ am besten durch einen Pfad erreicht wird, der in $t_2$ beginnt.

Hierbei sei angemerkt, daß zu jedem Zeitpunkt t ein globales Konfidenzmaß C beobachtet wird, wobei durch Anwendung des Viterbi-Algorithmus ein zugehörender Startzeitpunkt ermittelt wird.

Enthält die kontinuierliche Sprache etwas völlig anderes als das Schlüsselwort, so ist das Konfidenzmaß entsprechend schlecht, es findet keine Erkennung statt. Auch ist gemäß der Arbeitsweise des Viterbi-Algorithmus die Länge für verschiedene Pfade zur Bestimmung des globalen Konfidenzmaßes nicht gleich, angedeutet dadurch, daß das globale Konfidenzmaß $C^I$ aus den lokalen Konfidenzmaßen von vier Zuständen gebildet wird, während die globalen Konfidenzmaße $C^{II}$ und $C^{III}$ aus den lokalen Konfidenzmaßen von fünf Zuständen bestehen. Die Dauer der entsprechenden Schlüsselwörter ergibt sich somit zu $4\Delta t$ und zu $5\Delta t$.

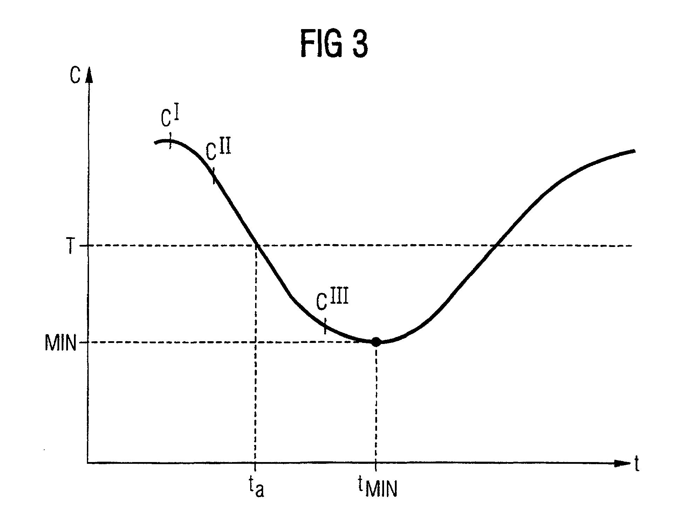

**Fig.3** veranschaulicht diesen Zusammenhang. Die aus Fig.2 ermittelten globalen Konfidenzmaße $C^I$, $C^{II}$ und $C^{III}$ sind beispielhaft in Fig.3 an der Ordinate aufgetragen. Die Abszisse kennzeichnet wieder die Zeit t.

Für jeden Zeitpunkt t ergibt sich jeweils ein eigenes globales Konfidenzmaß C.

Vorzugsweise wird ein Minimum MIN des globalen Konfidenzmaßes C bestimmt und somit davon ausgegangen, daß in diesem Minimum MIN das Schlüsselwort in der kontinuierlichen Sprache vorhanden ist.

Dies ist insofern von Bedeutung, als bereits zu einem Zeitpunkt $t_a$ die Schwelle T für das globale Konfidenzmaß C unterschritten wird, also das Schlüsselwort erkannt wird. Im Hinblick auf die variable dynamische Anpassung (unterschiedliche Zeitdauern zur Bestimmung des globalen Konfidenzmaßes) kann jedoch, wie hier in Fig.3 beispielhaft dargestellt ist, dieses Schlüsselwort zu unmittelbar bevorstehenden Zeitpunkten $t_{a+i}$ "noch besser" erkannt werden. Um festzustellen, wann das Schlüsselwort optimal erkannt wird, wird das Minimum MIN mit dem zugehörigen Zeitpunkt $t_{MIN}$ ermittelt. Von diesem Zeitpunkt $t_{MIN}$ aus wird mittels Backtracking (siehe [3]) der Startzeitpunkt des Schlüsselwortes in dem kontinuierlichen Sprachsignal bestimmt. Es wird also der Anfang des gesprochenen Schlüsselworts in dem kontinuierlichen Sprachsignal ermittelt.

Hierbei sei angemerkt, daß für jedes Schlüsselwort eine derartige Minimumsbestimmung durchgeführt werden kann, allerdings für die Zeitdauer eines Schlüsselwortes kein anderes Schlüsselwort erkannt werden kann. Werden parallel aus der kontinuierlichen Sprache überlappend mehrere Schlüsselwörter erkannt, so ist vorzugsweise das Schlüsselwort das richtige, dessen Konfidenzmaß im Vergleich zu den anderen Schlüsselwörtern die höchste Zuverlässigkeit widerspiegelt.

Im Rahmen dieses Dokuments wurden folgende Veröffentlichungen zitiert:

[1] M. Weintraub: "Keyword-spotting using SRI's DECIPHER large-vocabulary speech-recognition system", Proc. IEEE ICASSP, vol.2, 1993, Seiten 463-466.

[2] H.Boulard, B. D'hoore und J.-M. Boite: "Optimizing recognition and rejection performance in wordspotting Systems", Proc. IEEE ICASSP, vol.I, 1994, Seiten 373-376.

[3] L.R. Rabiner, B.H. Juang: "An Introduction to Hidden Markov Models", IEEE ASSP Magazine, 1986, Seiten 4-16.

[4] A. Hauenstein: "Optimierung von Algorithmen und Entwurf eines Prozessors für die automatische Spracherkennung", Doktorarbeit am Lehrstuhl für Integrierte Schaltungen der Technischen Universität München, 19.07.1993, Seiten 13-35.

**Patentansprüche**

1.  Verfahren zur Erkennung eines Schlüsselworts in gesprochener Sprache,

    a) bei dem das Schlüsselwort W dargestellt ist durch eine Folge von Zuständen von Hidden-Markov-Modellen (101),
    b) bei dem die gesprochene Sprache mit einer vorgegebenen Rate abgetastet und zu jedem Abtastzeitpunkt t ein Merkmalsvektor Ot für ein zu dem Abtastzeitpunkt t gehörendes Sprachsignals aus der gesprochenen Sprache erstellt wird (102),
    c) bei dem eine Folge O von Merkmalsvektoren $O_t$ mittels eines Viterbi-Algorithmus auf die Folge von Zuständen abgebildet werden, wobei bei einem Zustand ein lokales Konfidenzmaß anhand eines Emissionsmaßes berechnet wird (103),
    d) bei dem der Viterbi-Algorithmus ein globales Konfidenzmaß C liefert (104),
    e) bei dem das Schlüsselwort in der gesprochenen Sprache erkannt wird, wenn gilt:

$$C(W,O) < T, (105)$$

    wobei

    C()    das Konfidenzmaß,

W     das Schlüsselwort, dargestellt als eine Folge von Zuständen,

O     die Folge von Merkmalsvektoren $O_t$,

T     einen vorgegebenen Schwellwert

bezeichnen,

f) bei dem ansonsten das Schlüsselwort in der gesprochenen Sprache nicht erkannt wird.

2.   Verfahren nach Anspruch 1,
bei dem das Emissionsmaß ein negativer Logarithmus einer Emissionswahrscheinlichkeit ist.

3.   Verfahren nach Anspruch 1 oder 2,
bei dem zu jedem Abtastzeitpunkt t ein neuer Pfad in einem ersten Zustand der Folge von Zuständen W beginnt.

4.   Verfahren nach einem der vorhergehenden Ansprüche,,
bei dem der Viterbi-Algorithmus zu jedem Abtastzeitpunkt t ein globales Konfidenzmaß liefert.

5.   Verfahren nach einem der vorhergehenden Ansprüche,
bei dem das Konfidenzmaß C bestimmt ist durch

$$C = -\log P(W \mid O)$$

und das zugehörige lokale Konfidenzmaß bestimmt ist durch

$$c = -\log \frac{P\left(O_t \mid s_j\right) \cdot P\left(s_j\right)}{P\left(O_t\right)},$$

wobei

$s_j$     einen Zustand der Folge von Zuständen

bezeichnet.

6.   Verfahren nach einem der Ansprüche 1 bis 4, bei dem das Konfidenzmaß C bestimmt ist durch

$$C = -\log \frac{P(O \mid W)}{P(O \mid \overline{\overline{W}})},$$

und das zugehörige lokale Konfidenzmaß bestimmt ist durch

$$c = -\log \frac{P\left(O_t \mid s_j\right)}{P\left(O_t \mid \overline{s_j}\right)},$$

wobei

$\overline{W}$    nicht das Schlüsselwort W,

$\overline{s}_j$    nicht den Zustand $s_j$

bezeichnen.

7.   Verfahren nach einem der vorhergehenden Ansprüche,

bei dem das globale Konfidenzmaß für eine vorgegebene Zeitdauer bestimmt wird und aus einem Minimum des globalen Konfidenzmaßes auf einen Startzeitpunkt des Schlüsselwortes rückgeschlossen wird.

**8.** Verfahren nach Anspruch 7,
bei dem das Minimum unterhalb einer vorgegebenen Schwelle liegt.

**9.** Verfahren zur Erkennung mehrerer Schlüsselwörter, indem parallel für jedes Schlüsselwort ein Verfahren nach einem der vorhergehenden Ansprüche verwendet wird, wobei, sobald mehrere vorgegebene Schwellwerte unterschritten werden, das Schlüsselwort mit dem besseren Konfidenzmaß erkannt wird.

**10.** Verfahren nach Anspruch 9,
bei dem für den Zeitraum, in dem ein Schlüsselwort, das erkannt worden ist, in der gesprochenen Sprache enthalten war, kein weiteres Schlüsselwort erkannt wird.

**Claims**

**1.** Method for recognizing a keyword in spoken language,

a) in which the keyword W is represented by a sequence of states of hidden Markov models (101),
b) in which the spoken language is sampled at a prescribed rate and at each sampling instant t a feature vector $O_t$ for a speech signal belonging to the sampling instant t is produced (102) from the spoken language,
c) in which a sequence O of feature vectors $O_t$ is mapped by means of a Viterbi algorithm onto the sequence of states, a local confidence measure being calculated (103) for a state with the aid of an emission measure,
d) in which the Viterbi algorithm supplies (104) a global confidence measure C,
e) in which the keyword in the spoken language is recognized when it holds that:

$$C(W,O) < T, (105)$$

where

| | |
|---|---|
| C( ) | denotes the confidence measure, |
| W | denotes the keyword, represented as a sequence of states, |
| O | denotes the sequence of feature vectors $O_t$, |
| T | denotes a prescribed threshold value, and |

f) in which otherwise the keyword is not recognized in the spoken language.

**2.** Method according to Claim 1, in which the emission measure is a negative logarithm of an emission probability.

**3.** Method according to Claim 1 or 2, in which at each sampling instant t a new path begins in a first state of the sequence of states W.

**4.** Method according to one of the preceding claims, in which the Viterbi algorithm supplies a global confidence measure at each sampling instant t.

**5.** Method according to one of the preceding claims, in which the confidence measure C is determined by

$$C = - \log P(W|O)$$

and the associated local confidence measure is determined by

$$c = - \log \frac{P(O_t \mid s_j) \cdot P(s_j)}{P(O_t)}$$

where

$s_j$     denotes a state of the sequence of states.

**6.** Method according to one of Claims 1 to 4, in which the confidence measure C is determined by

$$C = -\log \frac{P(O \mid W)}{P(O \mid \overline{W})}$$

and the associated local confidence measure is determined by

$$c = -\log \frac{P(O_t \mid s_j)}{P(O_t \mid \overline{s_j})}$$

where

$\overline{W}$     does not denote the keyword W, and
$\overline{s_j}$     does not denote the state $s_j$.

**7.** Method according to one of the preceding claims, in which the global confidence measure for a prescribed time duration is determined, and a conclusion is drawn on a starting instant of the keyword from a minimum of the global confidence measure.

**8.** Method according to Claim 7, in which the minimum is below a prescribed threshold.

**9.** Method for detecting a plurality of keywords by using a method according to one of the preceding claims in parallel for each keyword, the keyword being recognized with the better confidence measure as soon as a plurality of prescribed threshold values are undershot.

**10.** Method according to Claim 9, in which no further keyword is recognized for the period in which a keyword which has been detected was contained in the spoken language.

**Revendications**

**1.** Procédé pour reconnaître un mot de passe dans un message verbal

a) au cours duquel le mot de passe W est représenté par une suite d'états de modèles de Markov cachés (101),
b) au cours duquel on interroge le message verbal avec une fréquence prédéterminée et on établit, à partir du message verbal, pour chaque instant d'interrogation t, un vecteur de caractéristiques $O_t$ pour un signal verbal, qui correspond à l'instant d'interrogation t (102),
c) au cours duquel on projette, au moyen d'un algorithme de Viterbi, une suite O de vecteurs de caractéristiques $O_t$ sur la suite d'états, une cote locale de confiance étant calculée pour un état à l'aide de la cote d'émission (103),
d) au cours duquel l'algorithme de Viterbi délivre une cote globale de confiance C (104),
e) au cours duquel le mot de passe est reconnu dans le message verbal lorsque la relation suivante est vérifiée:

$$C(W,O) < T \qquad (105)$$

dans laquelle

C ( )     désigne la cote de confiance,
W     le mot de passe, représenté comme une suite d'états,
O     la suite de vecteurs de caractéristiques $O_t$,
T     une valeur de seuil prédéterminée.

f) au cours duquel, dans le cas contraire, le mot de passe n'est pas reconnu dans le message verbal.

2. Procédé selon la revendication 1
au cours duquel la cote d'émission est un logarithme négatif d'une probabilité d'émission.

3. Procédé selon la revendication 1 ou 2
au cours duquel, à chaque instant d'interrogation t, commence un nouveau cheminement dans un premier état de la suite d'états W.

4. Procédé selon l'une des revendications précédentes
au cours duquel l'algorithme de Vterbi délivre, pour chaque instant d'interrogation t, une cote globale de confiance.

5. Procédé selon l'une des revendications précédentes
au cours duquel on détermine la cote de confiance C grâce à

$$C = - \log P(W|O)$$

et la cote locale de confiance correspondante est déterminée grâce à

$$c = - \log \frac{P(O_t|s_j) \cdot P(s_j)}{P(O_t)}$$

dans laquelle

$s_j$ désigne un état de la suite d'états.

6. Procédé selon l'une des revendications 1 à 4
au cours duquel on détermine la cote de confiance C grâce à

$$C = - \log \frac{P(O|W)}{P(O|\overline{W})}$$

et la cote locale de confiance correspondante est déterminée grâce à

$$c = - \log \frac{P(O_t|s_j)}{P(O_t|\overline{s}_j)}$$

dans lesquelles

$\overline{W}$ ne désigne pas le mot de passe W
$\overline{s}_j$ ne désigne pas l'état $s_j$.

7. Procédé selon l'une des revendications précédentes
au cours duquel on détermine la cote globale de confiance pour une durée prédéterminée et on décide de l'instant de début du mot de passe à partir d'un minimum de la cote globale de confiance.

8. Procédé selon la revendication 7
au cours duquel le minimum se trouve au-dessous d'un seuil prédéfini.

9. Procédé pour reconnaître plusieurs mots de passe en appliquant en parallèle,
pour chacun des mots de passe, un procédé selon l'une des revendications précédentes, le mot de passe avec la meilleure cote de confiance étant reconnu dès que plusieurs valeurs de seuil prédéfinies sont dépassées vers le bas.

**10.** Procédé selon la revendication 9
au cours duquel, pendant la période de temps pendant laquelle un mot de passe, qui a été reconnu, est contenu dans le message verbal, aucun autre mot de passe n'est reconnu.

**FIG 1**

101

102

103

104

105

**FIG 2**

Zustände des Schlüsselwortes SW

SW

ZS

$c^I$   $c^{II}$   $c^{III}$

$t_1$   $t_2$   $t_3$   $t_4$   $t_5$   $t_6$

t

EP 1 012 828 B1

# FIG 3

17